# EUROPÄISCHE PATENTSCHRIFT

(11) **EP 4 058 364 B1**
(45) Veröffentlichungstag und Bekanntmachung des Hinweises auf die Patenterteilung: **07.08.2024**
(21) Anmeldenummer: 20797171.4
(22) Anmeldetag: 28.09.2020
(51) Int. Cl.: B64F 5/30, B08B 1/32, B08B 1/30

(54) **REINIGUNGSVORRICHTUNG FÜR ROTORBLÄTTER**
CLEANING DEVICE FOR ROTOR BLADES
DISPOSITIF DE NETTOYAGE POUR AUBES DE ROTOR

(30) Priorität: 12.11.2019 DE 102019130536
(43) Veröffentlichungstag der Anmeldung: 21.09.2022
(73) Patentinhaber: Berner, Christian Stephan, 79576 Weil am Rhein (DE)
(72) Erfinder: MAISANO, Giuseppe, 79576 Weil am Rhein (DE); BERNER, Christian Stephan, 79576 Weil am Rhein (DE)
(74) Vertreter: Tahhan, Nader Isam Mark
(86) Internationale Anmeldenummer: PCT/IB2020/059037
(87) Internationale Veröffentlichungsnummer: WO 2021/094847

(56) Entgegenhaltungen:
- EP-A2- 2 727 843
- EP-A2- 2 752 621
- DE-A1- 102010 010 382
- KR-A- 20130 025 551
- US-A1- 2004 250 367

## Beschreibung

### Einleitung

Die Erfindung betrifft das Gebiet der Reinigungsvorrichtungen. Genauer betrifft die Erfindung eine Vorrichtung und ein Verfahren zur Reinigung eines Rotorblattes eines Luftfahrzeugs.

### Stand der Technik und Nachteile

Rotorblätter dienen der Erzeugung eines Vortriebs eines Fortbewegungsmittels durch Zusammenwirken desselben mit einem gasförmigen Medium. Bei einem Rotorblatt der hier im Vordergrund stehenden Art handelt es sich beispielsweise um ein Propellerblatt eines Propeller- oder Turboprop-Flugzeugs oder um das Rotorblatt eines Hubschraubers bzw. Drehflüglers.

Derartige Rotorblätter verschmutzen im Betrieb, beispielsweise durch Staub oder durch Insekten, die an der im Wesentlichen glatten Oberfläche der Rotorblätter haften bleiben und so im Betrieb zu unerwünschten Ablösungen der das Rotorblatt umströmenden Luft führen können. Es ist daher nötig, ein Rotorblatt zur Erhaltung eines bestmöglichen Wirkungsgrades sowie einer langen Lebensdauer regelmäßig gründlich zu reinigen.

Bisher erfolgt eine derartige Reinigung üblicherweise manuell, d.h. eine Person reinigt die Oberflächen des Rotorblatts mit einem feuchten Schwamm, einem Lappen o.Ä.

Bei den Propellern von kleineren Flugzeugen ist dies noch relativ einfach zu handhaben. Gegebenenfalls muss ein Propeller dabei allerdings nach der Reinigung eines seiner Rotorblätter etwas gedreht werden, damit die ihn reinigende Person an das nächste Rotorblatt des Propellers heranreichen kann. Unter Umständen ist das Drehen nur mit hohem Kraftaufwand möglich, da der Propeller in der Regel unmittelbar mit dem Motor verbunden ist und nicht entkoppelt werden kann. Bei unsachgemäßer Berührung des Propellers kann es zu Beschädigungen desselben, oder auch zu Verletzungen der ihn reinigenden Person kommen.

Problematischer ist das Reinigen bei den Rotorblättern z.B. eines Hubschraubers. Damit eine diese Rotorblätter reinigende Person an ein Rotorblatt heranreichen kann, benötigt diese Person üblicherweise ein Podest oder eine Trittleiter. Der Aufbau eines Podestes ist dabei relativ aufwendig. Andererseits kann mit einer Trittleiter das Rotorblatt nur über einen relativ kurzen Abschnitt gereinigt werden. Die reinigende Person muss dann von ihrer Trittleiter heruntersteigen, die Trittleiter versetzen und die Trittleiter dann wieder besteigen, bevor sie den nächsten kurzen Abschnitt reinigen kann.

Auch dies ist natürlich sehr aufwendig und zeitraubend. Außerdem ist es für eine die Reinigung durchführende Person sehr anstrengend, wiederholt eine Leiter hinauf und hinunter zu steigen, die Leiter zu versetzen und ggf. auch die Reinigungsutensilien jeweils zu versetzen.

Ein weiteres Problem bei der rein händischen Reinigung eines Rotorblattes besteht in dem je nach reinigender Person unterschiedlichen Reinigungsergebnis. Da jede Person über unterschiedliche Kraft, unterschiedliche Erfahrungen bei der Reinigung, und eine unterschiedliche Auffassung vom zu erzielenden Reinigungsergebnis hat, können die Reinigungsergebnisse unterschiedlicher Personen deutlich voneinander abweichen. Dies ist im Sinne eines reproduzierbaren Reinigungsergebnisses unerwünscht.

Die Druckschrift DE 38 77 086 T2 offenbart eine Vorrichtung, mit welcher die Oberfläche einer Tragfläche teilautomatisiert gereinigt werden kann, indem die Vorrichtung einen Hubwagen umfasst, auf welchem eine große rotierende Rolle, vergleichbar mit der einer Waschanlage für Kraftfahrzeuge, angeordnet ist. Somit verringert eine derartige Vorrichtung zwar die Abhängigkeit des Reinigungsergebnisses und entlastet den Benutzer in gewisser Weise. Die Vorrichtung ist jedoch nur zur Reinigung der Unterseite der Tragfläche geeignet; zudem ist sie sehr aufwändig aufgebaut.

Auch die Druckschrift US 2016 / 0 334 301 A1 entstammt demselben Fachgebiet wie die vorliegende Anmeldung und betrifft eine Vorrichtung zur Reinigung eines Rotorblattes eines Luftfahrzeugs. Diese Vorrichtung wird auf das Rotorblatt aufgesetzt und umfasst Mittel zum selbsttätigen Bewegen entlang des Rotorblatts, sowie mindestens ein Reinigungselement, welches ebenfalls bewegbar ist und sich selbsttätig um das Rotorblatt herum bewegen kann. Aufgrund des hohen Automatisierungsgrades ist die Vorrichtung jedoch verhältnismäßig komplex aufgebaut und benötigt eine entsprechende Steuerung, sowie eine Energieversorgung.

### Aufgabe der Erfindung und Lösung

Der Erfindung liegt demnach die Aufgabe zugrunde, eine Vorrichtung und ein Verfahren bereitzustellen, welche bzw. welches die Nachteile des Standes der Technik vermeidet.

Eine Aufgabe der vorliegenden Erfindung ist es daher, eine Vorrichtung anzugeben, die die vorstehend beschriebene mühselige Arbeit erleichtert und dabei betriebssicher ist.

Eine weitere Aufgabe der Erfindung besteht in der Bereitstellung einer Vorrichtung, mit welcher ein vom jeweiligen Benutzer möglichst unabhängiges, gutes Reinigungsergebnis erzielbar ist.

Die Aufgabe wird durch eine Vorrichtung nach Anspruch 1 sowie ein Verfahren nach nebengeordnetem Anspruch 12 gelöst. Vorteilhafte Ausführungsformen sind den jeweils abhängigen Unteransprüchen, der nachfolgenden Beschreibung sowie den Figuren zu entnehmen.

### Beschreibung

Zunächst erfolgt die Beschreibung der erfindungsgemäßen Vorrichtung. Im Anschluss wird das erfindungsgemäße Verfahren beschrieben.

Die Aufgabe wird gelöst durch eine Vorrichtung zur Reinigung eines Rotorblattes eines Luftfahrzeugs, welche eine Öffnung zur Durchführung des Rotorblattes aufweist. Die Öffnung kann dabei umlaufend geschlossen, vorzugsweise jedoch an einer Seite offen sein, ähnlich einem "U".

Die Öffnung hat einen (innenliegenden) Rand, wobei an wenigstens einem Seitenbereich dieses Randes wenigstens ein Reinigungselement vorhanden ist. Mittels dieses nachfolgend noch genauer zu beschreibenden Reinigungselementes erfolgt die (mechanische, durch Relativbewegung erzielte, ggf. durch Flüssigkeit unterstützte) Reinigung des Rotorblattes. Definitionsgemäß umfasst der Begriff der "Reinigung" auch ein Polieren der gewünschten Oberfläche, demgemäß ist die Vorrichtung nach allen Ausführungsformen auch zum Polieren oder anderweitigen Oberflächenbehandeln eines Rotorblattes geeignet.

An einem diesem Seitenbereich gegenüberliegenden weiteren Seitenbereich des Randes ist außerdem ein Stützelement zur Beschränkung der Rotation der Öffnung um eine Rotationsachse und zur Aufnahme von Druckkräften angeordnet. Diesem Stützelement kommt demnach die Aufgabe zu, ein ansonsten unkontrolliertes rotierendes Bewegen der Öffnung zu verhindern, in dem besagte Rotation durch Anlegen des Stützelements an das Rotorblatt (genauer: an die gegenüberliegende Seite desselben) unterbunden wird.

Die Öffnung ist in einem Rahmen angeordnet. Das bedeutet, dass der Rahmen dergestalt aufgebaut ist, dass er die umlaufend geschlossene oder einseitig offene Öffnung bereitstellt. Er kann aus mehreren Komponenten (z.B. verschraubten, verschweißten, verklebten oder zusammengesteckten Streben oder Stangen) bestehen, oder einstückig aufgebaut sein (z.B. mehrfach gebogenes Rohr). Bevorzugt ist eine leichte, jedoch ausreichend stabile (verwindungssteife) Konstruktion.

Erfindungsgemäß ist der Rahmen über ein die Rotationsachse bereitstellendes Gelenk kippbar mit einer Halterung verbunden. Der Begriff "Gelenk" ist vorliegend weit gefasst und nicht auf "Drehgelenke" (Scharniere, Wellenlagerungen etc.) beschränkt zu verstehen. Wesentlich ist lediglich, dass die beiden Komponenten, welche am Gelenk angebracht sind (Rahmen einerseits, Halterung andererseits) nicht vollständig starr miteinander verbunden sind, sondern zumindest (und bevorzugt genau) um eine Rotationsachse zueinander verkippt werden können. Demnach ist auch der Begriff "kippbar" zunächst nicht auf eine Rotationsrichtung beschränkt zu verstehen; gleichwohl ist ein Gelenk, welches genau eine Rotationsachse bereitstellt, bevorzugt.

Mittels Rotation oder Kippen des Rahmens um die Rotationsachse sind sowohl das wenigstens eine Reinigungselement, als auch das Stützelement am Rotorblatt anlegbar; das bedeutet, dass - nach einem initialen Aufschieben des die Öffnung bereitstellenden Rahmens auf das Rotorblatt - der Rahmen zunächst um besagte Rotationsachse rotiert, wobei dieselbe in etwa in der zur Längsachse senkrecht stehenden Normalebene des Rotorblattes verläuft. Bevorzugt verläuft sie normal zur Längsachse und senkrecht zur Oberflächennormalen des Rotorblatts. Die Rotation kommt dann zum Stillstand, wenn sowohl Reinigungselement als auch Stützelement an (gegenüberliegenden) Seiten des Rotorblattes anliegen. Erst in dieser Position ist ein sicherer mechanischer Kontakt zwischen Vorrichtung und Rotorblatt hergestellt, so dass eine Reinigung möglich ist.

Zugleich sind mittels der Halterung den Rahmen in Position am Rotorblatt haltende Kräfte bereitstellbar. Das bedeutet, dass die Halterung die Aufgabe hat, ein Gegenlager bereitzustellen, welches die durch die Rotation und das Anliegen erzeugten Kräfte auffangen kann, so dass die Vorrichtung an einer bestimmten Position haltbar, oder entlang einer bestimmten Bahn führbar ist.

Die Erfindung vermeidet somit die aus dem Stand der Technik bekannten Nachteile.

Die Erfindung erlaubt unter manueller Führung mittels der Halterung ein bequemes Reinigen eines Rotorblatts, da der Benutzer, eine entsprechende Länge der Halterung vorausgesetzt, nicht mehr auf eine Leiter oder sonstige Erhöhung steigen muss, um das Rotorblatt abschnittsweise zu reinigen. Die Bedienung der Vorrichtung ist demnach auch betriebssicher, da die Gefahr eines Unfalls deutlich verringert ist.

Außerdem ermöglicht die Erfindung die Erzielung eines vom jeweiligen Benutzer weitgehend unabhängigen, guten Reinigungsergebnisses, da die Vorrichtung konstruktiv vorgebbare (und somit im Wesentlichen vom Benutzer unabhängige) Reinigungsdrücke auf das Rotorblatt ausüben kann. Aufgrund der Möglichkeit des durchgehenden Reinigens eines Rotorblatts entlang seiner gesamten Länge entfällt auch das Vorhandensein der ansonsten je nach Benutzer unterschiedlich positionierten und unterschiedlich stark ausfallenden Überlappungen (oder gar Lücken) zwischen den gereinigten Einzelabschnitten.

Nachfolgend werden verschiedene Ausführungsformen der Erfindung näher beschrieben.

Nach einer bevorzugten Ausführungsform umfasst die Vorrichtung zwei Reinigungselemente. Das bedeutet, das auch das Stützelement als Reinigungselement ausgestaltet ist. Der Vorteil einer zwei Reinigungselemente umfassenden Vorrichtung besteht in der zeitgleich beidseitigen Reinigungsmöglichkeit des Rotorblatts. Mithin spart eine solche Vorrichtung erhebliche Zeit bei der Reinigung desselben.

Die Reinigungselemente können von gleicher, oder von unterschiedlicher Bauart sein (zu den Bauarten s.u.).

Jedes Reinigungselement kann auch mehrteilig ausgestaltet sein. Das bedeutet, dass es Untergruppen umfassen kann, welche aber als Einheit wirken.

Die Halterung kann als längerer Stiel ausgeführt sein, der optional längenverstellbar, beispielsweise teleskopierbar, ist. Grundsätzlich ist aber auch ein Arbeitsausleger eines Roboters als Halterung geeignet.

Das Gelenk kann nach einer Ausführungsform, in einer Seitenansicht gesehen, im Bereich der Verlängerung des die beiden Seitenbereiche verbindenden Mittelbereiches des Rahmens angeordnet sein. Der Abstand zum näherliegenden Seitenbereich kann wenige Zentimeter bis zu einem Meter oder mehr betragen.

Nach einer anderen Ausführungsform ist das Gelenk im Mittelbereich des Rahmens, also dem Bereich zwischen den beiden Seitenbereichen, angeordnet. Die Rotationsachse befindet sich dann ebenfalls zwischen den Seitenbereichen und somit innerhalb der Öffnung.

In einer Vorderansicht, also in Richtung der Längsachse des Rotorblattes blickend, ist es vorteilhaft, wenn das Gelenk in Arbeitsposition in etwa mittig zwischen den Kanten des Rotorblattes angeordnet ist. Insbesondere eine Anordnung so, dass die Vorrichtung ausbalanciert ist und weder zur einen noch zur anderen Kante zu kippen sucht, ist zu bevorzugen. Ggf. kann die Position zwischen den beiden Kanten auch justierbar sein, oder die Balance kann mittels eines verschieb- oder veränderbaren Gewichtes justiert werden.

Nach einer weiteren bevorzugten Ausführungsform ist das Gelenk zur Übertragung von Drehmomenten eingerichtet. Das bedeutet, dass das Gelenk (oder eine ihm zugeordnete Einrichtung) über die Halterung eingebrachte Kräfte, die zu einer Rotation der übrigen Vorrichtung führen, übertragen kann. Der Vorteil einer solchen Konstruktion liegt in der deutlich verbesserten Unterstützung beim Erreichen des o.g. Anliegens des oder der Reinigungselemente am Rotorblatt. Es ist beispielsweise möglich, dass das Gelenk so eingerichtet ist, dass es bestrebt ist, Halterung und Rahmen miteinander fluchtend auszurichten (Ruheposition). Wird durch einen Benutzer die Halterung, ermöglicht durch das Gelenk, relativ zum Rahmen gekippt, so erhöhen sich die Druckkräfte, welche das oder die Reinigungselemente auf das Rotorblatt ausüben, da die zum Kippen aufgewandte Kraft sich über das Gelenk fortpflanzt. Es ist klar, dass sich diese durch Vorspannung des Gelenks vorgegebene Ruheposition auch auf einen anderen Winkel einstellbar ist, beispielsweise auf 90 Grad, 45 Grad, 30 Grad, oder 120 Grad.

Vorzugsweise ist das Gelenk über eine Feder oder über ein Gewicht vorgespannt. Damit kann erreicht werden, dass der Rahmen bei einer entsprechenden Bewegung der Halterung zurückgeschwenkt und entlastet wird, und die Vorrichtung kann somit leicht und ohne Widerstand von dem zu reinigenden Rotorblatt abgehoben und abgenommen werden.

Der Begriff "Feder" ist weit gefasst und schließt alle Einrichtungen ein, welche der Speicherung und Wiederabgabe von potenzieller Energie ("Spannenergie") dienen. Derartige Einrichtungen können aus harten Materialien (z.B. Federstahl), oder aus elastischen Materialien (z.B. Gummi) bestehen oder solche Materialien umfassen.

Zur Übertragung von Drehmomenten kann das Gelenk eine Druck-, Zug- oder Torsionsfeder umfassen.

Das Gelenk kann auch als elastisches Element ausgebildet sein, beispielsweise als einfacher Stab, welcher als Bindeglied zwischen Halterung und Rahmen dient, so dass ein Kippen möglich ist, und zugleich die erwünschten Rückstellkräfte vorhanden sind.

Nach einer weiteren Ausführungsform ist zwischen Rahmen und Halterung eine Druck-, Zug- oder Torsionsfeder angeordnet. Das bedeutet, dass die Einrichtung zur Speicherung und Wiederabgabe von potenzieller Energie nicht im oder unmittelbar am Gelenk angeordnet ist, sondern sich außerhalb desselben befindet; trotzdem erlaubt die Einheit aus Gelenk und Einrichtung die gewünschte Übertragung von Drehmomenten.

Je nach Ausführung der Feder steigt die Übertragbarkeit des Drehmoments bei zunehmendem Kippwinkel mehr oder weniger stark an. Das bedeutet, dass es möglich ist, in einer Initialposition nahezu kein Drehmoment übertragen zu können, wobei dieses bei zunehmendem Kippen ebenfalls zunimmt.

Nach einer anderen Ausführungsform umfasst das Gelenk mindestens einen mechanischen Anschlag, welcher bei Erreichen einer Sperrposition ein weitergehendes relatives Kippen zwischen Halterung und Rahmen verhindert. Das bedeutet, dass vor Erreichen des Anschlags ein freies Kippen (ohne Übertragung von Drehmomenten) möglich ist, aber bei Erreichen der Sperrposition das volle Drehmoment übertragbar ist (starres Gelenk). Der Anschlag kann ein- oder beidseitig sein; letzteres bedeutet, dass zwei Sperrpositionen existieren, zwischen denen ein freies Kippen möglich ist.

Es ist auch möglich, die vorstehend beschriebenen Varianten miteinander zu kombinieren (Feder mit einem oder zwei Anschlägen).

Nach einer weiteren Ausführungsform erfolgt die Übertragung des Drehmoments motorisch. Das bedeutet, dass ein Motor oder Antrieb im oder am Gelenk vorhanden ist, welcher ein Drehmoment auf den Rahmen aufbringt, sofern die Halterung eine entsprechende Abstützung erfährt. Der Vorteil eine solchen Ausführungsform liegt insbesondere in der Regelbarkeit des Drehmoments mittels Regelbarkeit des Motors.

Ebenso ist auch jede andere Einrichtung denkbar, mittels welcher die Stärke des übertragbaren oder übertragenen Drehmoments einstellbar ist (z.B. Einstellung der Federhärte, Justierung eines entsprechenden Anschlags, Veränderung der Vorspannung).

Nach einer Ausführungsform ist das Reinigungselement als Reinigungsrolle ausgebildet (nachfolgend auch kurz "Rolle" genannt). Die Oberfläche der Reinigungsrolle kann schwammartig, bürstenartig, oder gelpolsterartig ausgestaltet sein. Eine derartige Rolle hat den Vorteil, dass sie gegenüber einem flächigen, nicht rotierbaren Reinigungselement eine größere (Umfangs-)Fläche aufweist, was ihre Schmutzaufnahmefähigkeit erhöht.

Eine solche Rolle kann auch an die Kontur der zu reinigenden Flügelkontur angepasst sein. Insbesondere beim Vorliegen eines Gelpolsters besteht die Möglichkeit, dass die Oberfläche aufgrund der Verteilmöglichkeit des Gels optimal an die (üblicherweise entlang der Länge variierende) Kontur des Rotorblatts anpassbar ist, was zu einer gleichmäßigen Kraftverteilung und somit Reinigungsleistung führt.

Es ist optional vorgesehen, dass die Rolle (zusätzlich) mit einem Frottee-, Fell- oder Mikrofaserbezug versehen ist. Es ist ferner möglich, dass die Rolle mit einem saugfähigen, konturierten Schwamm und/oder, wie erwähnt, mit einem Gelpolster ausgestattet ist.

Die Rolle kann auch als mehrteilige Rolleneinheit aufgebaut sein. Das bedeutet, dass zwei oder mehr Rollen auf einer Welle, und/oder hintereinander auf parallelen Wellen angeordnet sind. Über ein Gestell sind die Wellen miteinander verbunden, und das Gestell seinerseits ist mit dem Seitenschenkel des Rahmens verbunden.

Nach einer weiteren Ausführungsform ist die Reinigungsrolle über einen in eine Rotationsrichtung sperrenden Freilauf am Rahmen gelagert. Damit hat man die Möglichkeit, dass die Rolle bei einer Bewegung in eine erste Richtung, bei der der Freilauf die Rotation der Reinigungsrolle freigibt, auf der zu reinigenden Oberfläche des Rotorblattes entlang läuft und diese gegebenenfalls befeuchtet, so dass anhaftender Schmutz eventuell schon eingeweicht wird. Demgegenüber wird die Reinigungsrolle bei einer Bewegung in die Gegenrichtung, bei der der Freilauf die Rotation der Reinigungsrolle unterbindet, nicht-rollend, sondern reibend über die zu reinigende Oberfläche des Rotorblattes gezogen und dabei von an ihr haftendem Schmutz befreit.

Nach einer weiteren Ausführungsform ist die Reinigungsrolle federnd gelagert, um sich an unterschiedliche Rotorblattgeometrien und insbesondere -dicken anzupassen. Die entsprechende Federung der Reinigungsrolle kann beispielsweise durch deren einseitige Lagerung an einem Drehgelenk, welches über ein Feder- oder Elastomerelement vorgespannt ist, erfolgen. Mittels der Einstellung der Härte der Andruckfeder kann die auf die Seiten des Rotorblattes ausgeübte Kraft justierbar sein.

Nach einer anderen, mit beiden vorgenannten Ausführungsformen kombinierbaren Ausführungsform wird die Reinigungsrolle über einen Motor oder eine Antriebseinheit angetrieben. Auf diese Weise ist die Reinigungswirkung noch weiter steigerbar; insbesondere hartnäckige Verunreinigungen können somit ohne manuelles Hin-und-her-bewegen der Vorrichtung durch den Benutzer gereinigt werden. Die Bewegungsrichtung der Rolle kann optional manuell oder automatisch umschaltbar sein.

Nach einer anderen Ausführungsform ist das Reinigungselement als Reinigungsschwamm ausgebildet. Derartige Reinigungsschwämme sind ausreichend elastisch, um sich auch an eine gewölbte Rotorfläche anpassen zu können. Außerdem können sie gut mit einer Reinigungsflüssigkeit versehen werden und haben auch gute Schmutzaufnahmefähigkeit.

Bedarfsweise kann ein entsprechender Reinigungsschwamm auch mit einem Mikrofaserbezug versehen werden. Hierdurch werden die Reinigungskraft und die Schmutzaufnahme des Reinigungselementes entsprechend verbessert.

Wie auch die oben beschriebene Rolle, kann auch der Schwamm mehrteilig aufgebaut sein. Mehrere Schwämme können neben und/oder hintereinander angeordnet, und mittels eines Gestells zusammengefasst sein, welches seinerseits dann am Rahmen befestigt ist.

Nach einer Ausführungsform ist wenigstens ein Abschnitt des mit dem Reinigungsschwamm versehenen Seitenbereiches des Rahmens federnd in die Öffnung hinein beweglich, durch die das Rotorblatt hindurchgeführt ist. Bei Reinigungsschwämmen bieten sich insbesondere diese abschnittsweise stützende Federelemente wie beispielsweise Blattfedern oder federabgestützte Tragabschnitte an.

Hierdurch kann eine enge Anpassung des Reinigungselementes an die zu reinigende Oberfläche erreicht werden, sodass über die Breite der zu reinigenden Oberfläche ein gleichmäßiger Anpressdruck zu erreichen ist. Dabei ist, wie bereits erwähnt, zu berücksichtigen, dass die zu reinigende Oberfläche bei Rotorblättern gewölbt ist und sich diese Wölbung über die Länge eines Rotorblattes auch verändern kann.

Nach einer weiteren, mit der vorstehenden Ausführungsform kombinierbaren Ausführungsform umfasst der vorgenannte Abschnitt Drehlager, an welchen der Reinigungsschwamm angeordnet ist. Versuche haben jedoch überraschend ergeben, dass bei Vorsehen derartiger Drehlager auf eine anderweitige, federnde Lagerung verzichtet werden kann, da Reinigungsschwämme typischerweise von sich aus eine ausreichende Flexibilität aufweisen, um die gewünschte Anpassbarkeit an das Profil des Rotorblatts zu ermöglichen.

Nach einer weiteren Ausführungsform umfasst der Reinigungsschwamm ein Gelpolster. Dieses ermöglicht ebenfalls eine optimierte Anpassbarkeit an das Profil des Rotorblatts.

Nach einer weiteren Ausführungsform ist als Reinigungselement ein (im Wesentlichen flächiges) Gelpolster vorgesehen. Dieses wird besonders bevorzugt mit einem Mikrofasertuch oder einem anderen, saugfähigen, auswechselbaren Hilfsmittel überdeckt.

Soweit sinnvoll und konstruktiv möglich, können die vorgenannten Ausführungsformen auch miteinander kombiniert sein; dies betrifft unterschiedliche Seiten der Vorrichtung genauso wie dieselbe Seite. Es kann beispielsweise erwünscht sein, auf einer Seite sowohl einen Schwamm, als auch ein daneben angeordnetes Gelpolster zu haben, oder eine z.B. unterbrochen ausgestaltete Rolle, wobei der sich so ergebende Zwischenraum von einem Schwamm gereinigt werden kann.

Nach einer weiteren Ausführungsform wird das Reinigungselement über eine Flüssigkeitszufuhr mit einer Reinigungsflüssigkeit versorgt.

Diese Flüssigkeitszufuhr erfolgt vorzugsweise durch die Halterung, wodurch eine kompakte Bauform ermöglicht wird. Die genannte Reinigungsflüssigkeit kann dann z.B. über Düsen oder Tropföffnungen an einem Befeuchtungsschlauch oder -rohr auf oder in das Reinigungselement abgegeben werden. Hierdurch kann eine ausreichende Befeuchtung des Reinigungselementes und der zu reinigenden Oberfläche, und damit eine ausreichende Reinigungswirkung sichergestellt werden, ohne dass die Vorrichtung mehrmals von einem zu reinigenden Rotorblatt abgenommen und separat befeuchtet werden müsste.

Vorzugsweise wird Flüssigkeit auch auf das oder die weiteren Reinigungselemente abgegeben, sofern solche vorhanden sind.

Bei einer weiteren Ausführungsform, welche besonders bevorzugt mit der vorstehend beschriebenen Ausführungsform kombinierbar ist, ist das Reinigungselement als Reinigungsrolle ausgebildet, und wird über einen Hydraulikmotor angetrieben. Die Reinigungsflüssigkeit dient dabei - insbesondere, bevor sie auf das Reinigungselement aufgebracht wird, - als Antriebsfluid für diesen Rotationsantrieb der Reinigungsrolle.

Bei anderen alternativen Ausführungsformen - insbesondere solchen ohne Reinigungsflüssigkeit - werden die Reinigungsrollen statt über besagten Hydraulikmotor über einen Elektro- oder einen Pneumatikmotor angetrieben.

Nach einer weiteren Ausführungsform der Vorrichtung ist der Abstand zwischen den beiden Seitenbereichen mittels einer durch Kippen der Halterung aktivierbaren Kinematik beeinflussbar.

Die Änderbarkeit des Abstandes hat den Vorteil, dass Rotorblätter mit noch unterschiedlicheren Dicken sicher mit der Vorrichtung gereinigt werden können, und dass - bei dünneren Rotorblättern - die Rotation des Rahmens weniger weit erfolgen muss, um beide Seitenbereiche mit den Reinigungselementen in Anlage mit dem Rotorblatt zu bringen. Der Grund ist, dass bei einem kleineren Abstand das Anlegen durch sukzessive Rotation früher erfolgt als bei einem größeren Abstand; die durch den Rahmen aufgespannte Ebene verläuft senkrechter zur Längsachse des Rotorblatts, bzw. die typischerweise in senkrechter Ausrichtung beginnende Rotation kommt schneller zum Erliegen. Somit ist auch ein schnelleres Vorbereiten des eigentlichen Reinigungsvorgangs möglich.

Die Kinematik kann beispielsweise durch ein am Ende der Halterung angeordnetes Zahnrad, welches mit einer am Mittelschenkel des Rahmens angeordneten Zahnstange zusammenwirkt, bereitgestellt sein. Das Zahnrad ist dabei auch fest am Gelenk angeordnet. Ändert sich der Kippwinkel, zieht das Zahnrad die Zahnstange in die entsprechende Richtung, so dass sich der Mittelschenkel verkürzt, wodurch sich der Abstand der beiden Seitenbereiche verringert.

Ein anderes Beispiel für eine Kinematik nutzt eine am proximalen Ende der Halterung angeordnete Nocke. Durch Rotieren derselben drückt diese mehr oder weniger weit auf einen Mitnehmer, welcher wiederum am Mittelschenkel angeordnet ist, und diesen zusammenschiebt. Um auf einfache Weise eine entgegengesetzte (rückstellende) Bewegung zu erlauben, kann der Mitnehmer gegen eine Feder arbeiten.

Ein weiteres Beispiel umfasst einen Seilabschnitt, welcher mit einem Ende um einen Zapfen gewickelt ist, der seinerseits mit der Rotationsachse des Gelenks kollinear am proximalen Ende der Halterung angeordnet ist. Rotiert die Halterung um die Rotationsachse, wickelt sich der Seilabschnitt auf oder ab. Mit seinem anderen Ende ist der Seilabschnitt derart am federunterstützten Mitnehmer befestigt, dass letzterer bei Verkürzung (Aufwickeln) die beiden Seitenschenkel einander annähert, und bei Verlängerung (Abwickeln) voneinander entfernt.

Selbstverständlich sind auch andere, gleichwirkende Maßnahmen denkbar, die zu einer Veränderung des Abstandes beider Seitenbereiche zueinander führen.

Auch durch einen im Bereich der Halterung angeordneten Seilzug oder dergleichen kann o.g. Zahnrad- oder Nockenkinematik aktivierbar sein. In diesem Fall ist es möglich, die Kinematik auch ohne das beschriebene Kippen zu aktivieren.

Die Aktivierung kann auch motorisch erfolgen; der zugehörige Schalter ist dann vorzugsweise im Bereich des distalen Endes der Halterung anzuordnen. Es ist ferner denkbar, dass im Bereich des Rahmens an geeigneter Stelle Sensoren (Drucksensoren, optische entfernungsmessende Sensoren, ...) vorhanden sind, die besagte Annäherung selbsttätig regeln, d.h., dass der Rahmen zunächst eine größtmögliche Öffnung aufweist, und sich diese dann sukzessive verkleinert, bis die beiden Seitenschenkel ausreichend nah am Rotorblatt positioniert sind.

Eine weitere Ausführungsform betrifft eine (halb-)automatische Vorrichtung. Demnach weist diese zwei Reinigungsrollen, oder eine Reinigungsrolle und ein rollenförmig ausgestaltetes Stützelement auf. An einem distalen Ende der Halterung, die dann nicht vornehmlich zum Halten in der Hand vorgesehen ist, ist eine "Abstützeinheit" (nicht zu verwechseln mit dem weiter oben genannten "Stützelement") zur reibungsarmen Lagerung dieses Endes am Rotorblatt vorgesehen. "Reibungsarm" bedeutet, dass beim Entlanggleiten dieses Endes auf dem Rotorblatt keine Beschädigung desselben auftreten darf. Das Ende kann mit einer gleitenden Fläche, oder mit einer oder mehreren Rollen ausgestattet sein. Optional kann die Abstützeinheit, je nach konkreter Ausführungsform derselben, zusätzlich oder ergänzend auch eine reinigende Wirkung auf das Rotorblatt haben.

Weiter sind Reinigungsrolle und Stützelement mittels einer Antriebseinheit derart antreibbar und/oder derart beschaffen, dass mit ihnen die Vorrichtung in eine Vorzugsrichtung bewegbar ist.

Die Antriebseinheit kann beispielsweise zwei Motoren umfassen, welche jeweils eine Rolle antreiben, oder sie umfasst ein Getriebe, welches die Rotation des Motors auf beide Rollen überträgt. Bei im Wesentlichen identischen Rollen können so unterschiedliche Umfangsgeschwindigkeiten an der Kontaktfläche Rolle/Rotorblattoberfläche erreicht werden. Zur Erzielung unterschiedlicher Umfangsgeschwindigkeiten können die Rollen auch unterschiedliche Durchmesser aufweisen, oder das Getriebe übernimmt diese Aufgabe in bekannter Weise. Bei Vorhandensein von zwei Motoren können diese mit unterschiedlichen Umdrehungszahlen arbeiten.

Die Rollen können aber auch anderweitig so beschaffen sein, dass sich der erwünschte Effekt der Bewegung der Vorrichtung in eine bestimmte Richtung ergibt. Insbesondere durch Variation des Gleitreibungskoeffizienten zwischen Rolle und Rotorblatt können ansonsten (geometrisch) im Wesentlichen identische Rollen, bei gleicher Umfangsgeschwindigkeit, zu jeweils unterschiedlichen resultierenden Vortriebskräften führen, deren Summe die Richtung und Geschwindigkeit der Vorrichtung bestimmt.

Auch durch die Variation der Rollenfläche kann die resultierende Kraft variiert werden. Es ist jedoch darauf zu achten, dass weiterhin die gesamte Breite des Rotorblatts gereinigt wird. Ggf. sind hier mehrteilige Rollen vorzusehen (s.o.).

Der Vorteil dieser Ausführungsform liegt darin, dass die Vorrichtung selbsttätig entlang des Rotorblattes fahren kann. Durch die unterschiedlichen Umfangsgeschwindigkeiten kommt es zu einer Relativgeschwindigkeit zwischen der an der Ober- und der Unterseite des Rotorblatts anliegenden Rolle, welche zu einer linearen Bewegung der Vorrichtung führt. Die Halterung mit Abstützeinheit sorgt, zusammen mit dem Gelenk, für die entsprechende Führung und Vorspannung des Rahmens.

Die Vorrichtung kann mittels einer Fernbedienung aktivierbar und/oder deaktivierbar sein, oder sie umfasst einen Sensor, welcher das Erreichen einer Stopp-Position (proximales oder distales Ende eines Rotorblattes) detektiert, so dass weder die Vorrichtung das Luftfahrzeug beschädigt, noch selber (beispielsweise durch Herabfallen) beschädigt wird.

Der Vorteil einer solchen Ausführungsform liegt darin, dass das Reinigungsergebnis gänzlich unabhängig vom Benutzer wird, da dieser lediglich für das initiale Aufsetzen der Vorrichtung auf das Rotorblatt und das Starten des Reinigungsvorgangs zuständig ist. Mithin sind hochreproduzierbare Reinigungsergebnisse erreichbar.

Auch nach einer anderen Ausführungsform, bei welcher die Halterung an einem distalen Ende zur manuellen Führung durch den Benutzer vorgesehen ist, kann die Vorrichtung besagte Motorisierung umfassen. Wahlweise können die Rollen gleiche oder unterschiedliche Umfangsgeschwindigkeiten aufweisen. Bei gleichen Umfangsgeschwindigkeiten erfolgt der Vortrieb durch den Benutzer. Bei unterschiedlichen Umfangsgeschwindigkeiten hält der Benutzer die Vorrichtung, welche sich jedoch im Wesentlichen selbsttätig entlang des Rotorblattes bewegt. Der Benutzer kann mittels eines am distalen Ende der Halterung befindlichen Schalters die Rotation starten, stoppen, regeln, und optional auch umkehren. Es ist klar, dass die resultierende Vorzugsrichtung des Rahmens mit den Rollen auch auf andere, weiter oben beschriebene Art und Weise erreichbar ist.

Der Vorteil dieser Ausführungsform liegt in dem verbesserten Reinigungsergebnis, da die rotierenden Rollen einen besseren Schmutzabtrag gewährleisten. Zudem wird der Benutzer ggf. von der Aufgabe des aktiven Bewegens der Vorrichtung weitgehend entlastet.

Nunmehr erfolgt die Beschreibung des erfindungsgemäßen Verfahrens zum Reinigen eines Rotorblattes eines Luftfahrzeugs. Bevorzugt erfolgt die Durchführung des Verfahrens unter Verwendung der erfindungsgemäßen, vorstehend beschriebenen Vorrichtung.
(a) Zunächst wird das Rotorblatt durch eine in einem Rahmen angeordnete Öffnung hindurchgeführt, die einen (zum Rotorblatt weisenden) Rand aufweist, wobei an wenigstens einem Seitenbereich dieses Randes wenigstens ein Reinigungselement vorhanden ist. Somit ist die Vorrichtung am Rotorblatt derart positioniert, dass sich letzteres in der Öffnung der Vorrichtung befindet.
(b) Alsdann wird durch Kippen des Rahmens mittels einer Halterung, die mittels eines Gelenks am Rahmen angeordnet ist, das wenigstens eine Reinigungselement an einer Seite des Rotorblattes angelegt. Hält der Benutzer die Halterung in der Hand, bewegt er diese derart (typischerweise mit dem distalen Ende der Halterung nach oben), dass sich (beim Beispiel eines horizontal ausgerichteten Rotorblattes) der mit der Halterung verbundene Rahmen von einer zunächst eher "stehenden" Position, in welcher der Rahmen besonders leicht auf das Rotorblatt gebracht werden kann, in eine eher "liegende" Position gebracht wird (Kippen der gesamten Vorrichtung), in welcher die Seitenbereiche näher am Rotorblatt liegen. Somit nähern sich die beiden Seitenbereiche des Rahmens immer mehr an die Seiten des Rotorblattes an, bis einer derselben (bzw. das daran angeordnete Reinigungs- oder Stützelement, s.u.) in unmittelbaren Kontakt mit dem Rotorblatt kommt.
(c) Schließlich wird das weitere Kippen des Rahmens mittels eines Stützelements, das an einem dem Seitenbereich gegenüberliegenden weiteren Seitenbereich des Randes angeordnet ist, beschränkt, indem besagtes Stützelement an einer gegenüberliegenden Seite des Rotorblattes anliegt, wobei es auch Druckkräfte aufnimmt. Anders ausgedrückt, durch weiteres Kippen der Vorrichtung (und somit auch des Rahmens) gelangt schließlich auch das andere Reinigungs- oder Stützelement in Kontakt mit der gegenüberliegenden Seite des Rotorblattes. Eine weiteres Kippen des Rahmen ist dann nicht mehr möglich, da sich beide Seitenschenkel desselben nicht weiter in Richtung des Rotorblattes bewegen können.
(d) Weiterhin möglich ist hingegen ein Kippen der Halterung, da diese mittels des Gelenks "kippbar" (rotierbar) mit dem Rahmen verbunden ist. Das bedeutet, dass der Rahmen um das Gelenk rotier- oder kippbar ist, also die Ausrichtung von Halterung und Rahmen änderbar ist, so dass sich der Winkel zwischen beiden Komponenten ändert, und zwar insbesondere verkleinert.

Mittels eines Kippens der Halterung um eine durch das Gelenk vorgegebene Rotationsachse wird nunmehr der Winkel zwischen Halterung und Rahmen verkleinert, so dass Druckkräfte sowohl auf das mindestens eine Reinigungselement, als auch das Stützelement ausgeübt werden, welche diese Komponenten gegen die Seiten des Rotorblattes pressen. Diese Druckkräfte sind insofern relevant, als dass nur durch Ausübung gewisser Reibungskräfte zwischen Reinigungselement und zu reinigender Fläche auch ein Schmutzabtrag erfolgen kann. Je höher die Druckkräfte, desto stärker die Reibung, und desto höher die Reinigungswirkung. Allerdings ist zu beachten, dass zu hohe Druckkräfte zu einer Beschädigung der Vorrichtung und/oder der zu reinigenden Oberfläche führen können. Demnach ist es besonders vorteilhaft, wenn die Druckkräfte in einem festlegbaren Bereich liegen, der nach Möglichkeit nicht verlassen wird. Auch dies ist mit der erfindungsgemäßen Vorrichtung möglich, wie nachfolgend noch gezeigt wird.

(e) Weiterhin werden nun mittels der Halterung den Rahmen in Position am Rotorblatt haltende Kräfte bereitgestellt. Anders ausgedrückt, der Benutzer hält die Vorrichtung so, dass ein gewisser Kippwinkel vorhanden ist, so dass reinigende Druckkräfte auf die Rotorblattseiten ausgeübt werden. Er kann - je nach Ausführungsform - die Vorrichtung manuell vor- und zurückbewegen, so dass das Rotorblatt entsprechend gründlich gereinigt werden kann.

Nach einer besonders bevorzugten Ausführungsform wird mittels des Gelenks auch ein Drehmoment übertragen. Dieses Drehmoment unterstützt das Anliegen des wenigstens einen Reinigungselements und des Stützelements an den gegenüberliegenden Seiten des Rotorblatts. Das Erhöhen des o.g. Kippwinkels zwischen Halterung und Rahmen erzeugt nunmehr ein Drehmoment um das Gelenk, welches zu einem verstärkten Anliegen der beiden Seitenbereiche des Rahmens führt. Durch Verändern des Winkels lassen sich die Druckkräfte variieren (ein kleinerer Winkel führt zu höheren Druckkräften) . Wird nun das Drehmoment über eine nicht zu harte Feder (z.B. Torsionsfeder) von der Halterung auf den Rahmen übertragen, führt ein Verändern der horizontalen Positionierung der Halterung nur zu einer geringfügigen Veränderung der Druckkräfte; das Reinigungsergebnis ist dann beispielsweise von der Haltehöhe durch unterschiedliche Benutzer weitgehend unabhängig.

Ist hingegen die Haltehöhe weitgehend konstant, so kann durch Einstellung der Härte der Feder auch die Einstellung der Druckkräfte erfolgen. Auch auf diese Weise erreicht man eine weitgehend gleichmäßige, vom Benutzer unabhängige Reinigungswirkung, denn diese wird von der Federhärte vorgegeben. Sofern die Halterung in einer definierten Lage gehalten wird, beispielsweise horizontal, werden die Druckkräfte nur noch durch die Härte der Feder bestimmt.

Es ist auch möglich, die Vorrichtung als weitgehend selbsttätig arbeitende Vorrichtung auszugestalten. Dabei stützt sich eine Abstützeinheit, welche an einem distalen Ende der Halterung angeordnet ist, reibungsarm am Rotorblatt ab, während an den Seitenbereichen rollenförmige Reinigungselemente, oder ein rollenförmiges Reinigungselement und ein rollenförmig ausgestaltetes Stützelement angeordnet sind, welche mittels einer Antriebseinheit auf unterschiedliche Umfangsgeschwindigkeiten angetrieben werden.

Die Abstützeinheit übernimmt hier die Aufgabe, die in den vorherigen Ausführungsformen durch den Benutzer erfüllt wurde, nämlich das Bereitstellen einer "Haltekraft", mit welcher die Vorrichtung in Position gehalten wird. Auch in diesem Fall ist ein Gelenk vorhanden, welches zwischen Halterung und Rahmen angeordnet ist; vorzugsweise überträgt dieses auch ein Drehmoment.

Die beiden Rollen (vorzugsweise sind beide Reinigungselemente) sind angetrieben und weisen eine unterschiedliche Umfangsgeschwindigkeit auf; auf die Erläuterungen zur entsprechend ausgestalteten Vorrichtung weiter oben wird zur Vermeidung von Wiederholungen verwiesen.

Im Ergebnis kann sich eine solcherart ausgestaltete Vorrichtung selbsttätig entlang des Rotorblattes bewegen. Besonders bevorzugt ist die Antriebs- und somit die Bewegungsrichtung umkehrbar, so dass es beispielsweise möglich ist, die Vorrichtung durch den Benutzer am distalen Ende eines Rotorblattes anzusetzen und einzuschalten, worauf sie selbsttätig bis zum proximalen Ende fährt, dessen Erreichen sie detektiert, worauf die Antriebsrichtung umgekehrt wird, so dass die Vorrichtung schließlich zurück zum Benutzer fährt, der sie dann abschaltet.

### Figurenbeschreibung

Nachfolgend wird die Erfindung anhand von Figuren beispielhaft erläutert. Dabei zeigt
- **Figur 1**: die Prinzipskizze einer Rotorblatt-Reinigungsvorrichtung in der Vorderansicht;
- **Figur 2**: die Prinzipskizze der Rotorblatt-Reinigungsvorrichtung gem. Fig. 1 in der Seitenansicht;
- **Figur 3**: die Prinzipskizze einer alternativen Ausführungsform einer Rotorblatt-Reinigungsvorrichtung in der Vorderansicht;
- **Figur 4**: die Prinzipskizze einer weiteren alternativen Ausführungsform einer Rotorblatt-Reinigungsvorrichtung in der Vorderansicht;
- **Figur 5**: die Prinzipskizze einer Rotorblatt-Reinigungsvorrichtung mit Reinigungsrollen in der Vorderansicht;
- **Figur 6**: die Prinzipskizze der Rotorblatt-Reinigungsvorrichtung gem. Fig. 5 in der Seitenansicht;
- **Figur 7**: die Prinzipskizze einer anderen alternativen Ausführungsform der Rotorblatt-Reinigungsvorrichtung in der Vorderansicht;
- **Figur 8**: die Prinzipskizze der Rotorblatt-Reinigungsvorrichtung gem. Fig. 7 in der Seitenansicht;
- **Figur 9**: die Prinzipskizze eines Details einer weiteren alternativen Rotorblatt-Reinigungsvorrichtung in der Vorderansicht;
- **Figur 10**: die Prinzipskizze der Rotorblatt-Reinigungsvorrichtung gem. Fig. 9 in der Seitenansicht.

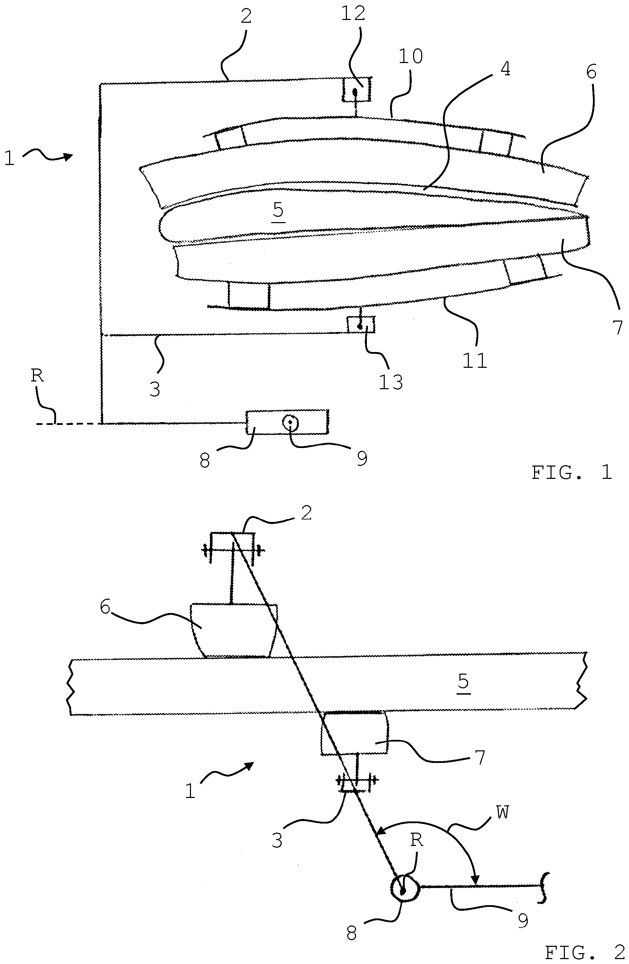

In der **Figur 1** ist die Prinzipskizze einer Rotorblatt-Reinigungsvorrichtung in der Vorderansicht dargestellt. Man erkennt einen im Wesentlichen U-förmigen Rahmen 1, bei dem zwischen zwei Seitenschenkeln 2, 3 eine Öffnung 4 vorhanden ist, durch die ein zu reinigendes Rotorblatt 5 hindurchragt. Die Seitenschenkel 2, 3 befinden sich demnach an den beiden Seitenbereichen des Rahmens 1.

An den Seitenschenkeln 2 bzw. 3 sind im hier dargestellten Beispiel Reinigungselemente in Form von Reinigungsschwämmen 6, 7 angebracht, die im Seitenbereich der Öffnung 4 deren Rand bilden.

Im hier dargestellten Beispiel ist die Öffnung 4 in zwei gegenüberliegend positionierten Seitenbereichen mit entsprechenden Reinigungsschwämmen 6 bzw. 7 versehen. Nach einer nicht gezeigtem Ausführungsform ist es jedoch auch möglich, wenn lediglich einer dieser beiden Seitenbereiche durch ein entsprechendes Reinigungselement belegt ist und der andere, gegenüberliegende Seitenbereich des Randes beispielsweise mit einem Stützelement (Stützrollen, nicht dargestellt) versehen ist.

Außerdem ist es möglich, dass, nach einer nicht dargestellten Ausführungsform, nicht nur die Seitenbereiche des Randes der Öffnung 4 mit entsprechenden Reinigungselementen versehen sind, sondern auch die Stirnfläche der Öffnung 4 mit einem entsprechenden Reinigungselement versehen ist. Besonders bevorzugt sind dann alle Bereiche zusammenhängend ausgestaltet, so dass auch zumindest die Vorderkante des Rotorblattes 5 gereinigt werden kann.

Der in der Fig. 1 dargestellte Rahmen 1 ist über ein Gelenk 8 mit einer insbesondere in der **Figur 2** zu erkennenden Halterung 9 verbunden, wobei in der Fig. 2 wie auch in allen anderen Figuren identische Elemente mit identischen Bezugszeichen versehen sind.

Die Halterung 9 ist ein hier nur abschnittsweise dargestellter Stiel, der (ebenfalls nicht dargestellt) bedarfsweise auch teleskopartig ausgebildet sein kann.

Bei einer Bewegung des als Halterung 9 ausgebildeten Stieles parallel zur Längsachse des Rotorblattes 5 (im hier dargestellten Beispiel nach rechts) kippt der Rahmen 1 (im hier dargestellten Beispiel gegen den Uhrzeigersinn) um das Gelenk 8, so dass der Reinigungsschwamm 6 an der Oberseite des Rotorblattes 5 auf dessen Oberfläche gedrückt wird. Gleichzeitig wird auch auf der Unterseite des Rotorblattes 5 der Reinigungsschwamm 7 gegen die Oberfläche des Rotorblattes 5 gedrückt. Bei einer Weiterführung der Bewegung des Stieles (weiterhin nach rechts) werden dann die Reinigungsschwämme 6, 7 entlang der genannten Oberflächen bewegt und können diese reinigen.

Es sei noch erwähnt, dass vorzugsweise das Gelenk 8 über eine Feder oder über ein (hier nicht dargestelltes) Gewicht vorgespannt ist. Damit kann erreicht werden, dass der Rahmen 1 bei einer entsprechenden Bewegung der Halterung 9 (im hier dargestellten Beispiel nach links) nicht zurückgeschwenkt wird, sondern weiterhin ein sicheres Anliegen der beiden Reinigungselemente am Rotorblatt 5 gewährleistet ist.

Damit die Reinigungsschwämme 6, 7 sich bei dem oben angesprochenen Reinigungsvorgang eng an die typischerweise gewölbt ausgeführten Oberflächen des Rotorblattes 5 anpassen, sind die Reinigungsschwämme 6, 7 im vorliegenden Beispiel über Blattfederelemente 10, 11 unter Zwischenschaltung von Drehlagern 12, 13 an den Seitenschenkeln 2, 3 des Rahmens 1 befestigt.

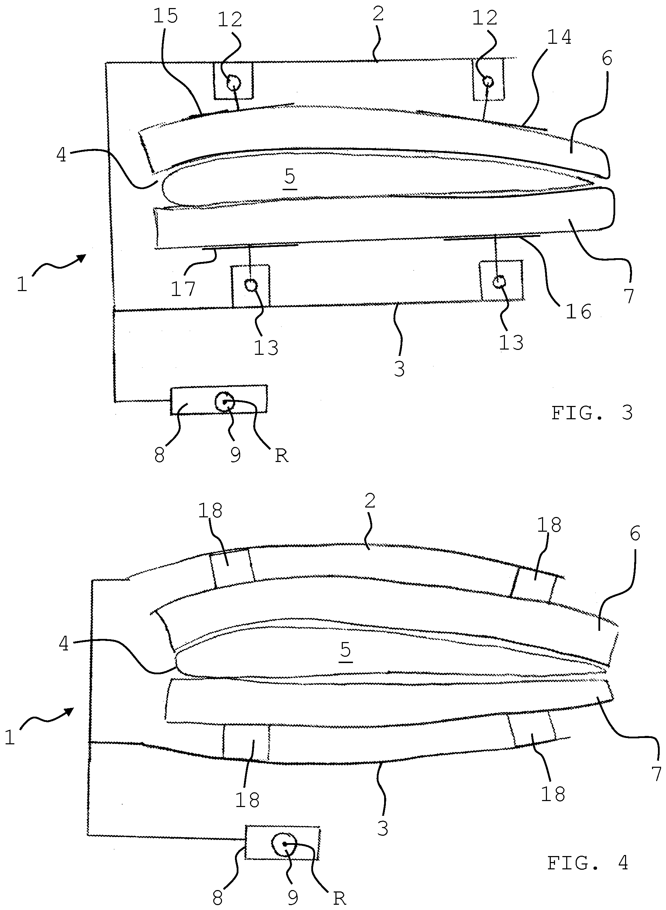

In **Figur 3** und **Figur 4** sind hierzu alternative Ausführungsformen dargestellt. So erkennt man in der Fig. 3, dass die dort dargestellten Reinigungsschwämme 6, 7 über sie abschnittsweise stützende Tragabschnitte 14, 15, 16, 17 unter Zwischenschaltung von Drehlagern 12 bzw. 13 an die Seitenschenkel 2 bzw. 3 angekoppelt sind. Dies funktioniert, da die Reinigungsschwämme 6, 7 in ihrer Erstreckung typischerweise dehn- und biegbar sind.

In der Fig. 4 ist des Weiteren dargestellt, dass die entsprechenden Reinigungsschwämme 6 bzw. 7 auch über entsprechende starre Anschlussstücke 18 mit den Seitenschenkeln 2, 3 verbunden sein können, wenn diese wie in der hier dargestellten Ausführungsform blattfederartig ausgestaltet sind.

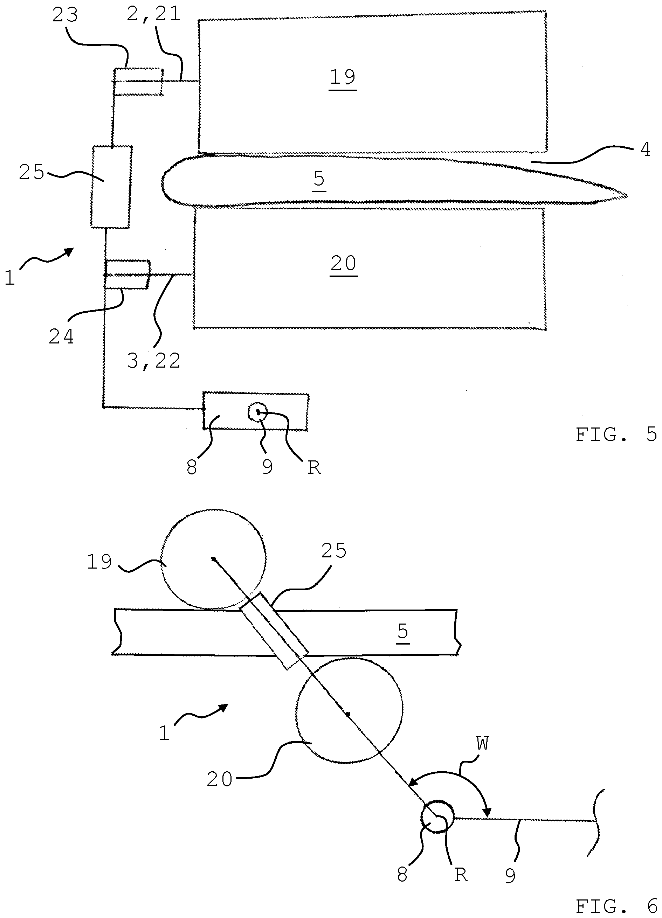

In der **Figur 5** ist eine Ausführungsform dargestellt, bei der die Reinigungselemente als Reinigungsrollen 19, 20 ausgebildet sind. Diese Reinigungsrollen 19, 20 sind über Wellen 21, 22 in Freiläufen 23, 24 gelagert, über die sie mit dem Rahmen 1 verbunden sind. Die Wellen 21, 22 bilden dabei die Seitenschenkel 2, 3 für die zwischen ihnen liegende Öffnung 4. Die schematisch angedeutete Andruckfeder 25 erlaubt ein Nachgeben bzw. Nachführen der beiden Reinigungsrollen 19, 20 bei sich ändernder Dicke des Rotorblatts 5.

Auch bei dieser Ausführungsform ist von Bedeutung, dass der Rahmen 1 über das Gelenk 8 kippbar mit der Halterung 9 verbunden ist (Winkel W). Auch hier wird, wie in der **Figur 6** zu erkennen, bei einer Bewegung des Stieles parallel zur Erstreckung des Rotorblattes 5 (in der Zeichnung nach rechts) der Rahmen 1 um das Gelenk 8 (gegen den Uhrzeigersinn) kippen und dabei die Reinigungsrolle 19 auf die Oberseite und die Reinigungsrolle 20 an die Unterseite des Rotorblattes 5 drücken. Durch die Freiläufe 23 bzw. 24 ist gewährleistet, dass die Halterung 9 in der Figur 6 ohne viel Kraftaufwand in die Gegenrichtung (also in der Fig. 6 nach links) geschoben werden kann, wobei die Rollen 19 und 20 über die Oberflächen des Rotorblattes 5 rollen. Dabei befeuchten sie diese Oberflächen, was zu einem Aufweichen von dort anhaftendem Schmutz führt. Bei einer Bewegung der Halterung 9 wiederum nach rechts sperren die Freiläufe 23 bzw. 24, und die Reinigungsrollen 19 und 20 werden in diesem blockierten Zustand über die vorher befeuchteten Oberflächen des Rotorblattes 5 bewegt und reinigen diese damit intensiv.

Es sei an dieser Stelle erwähnt, dass bei dieser Ausführungsform innerhalb des Gelenkes 8 eine Federvorspannung (nicht gezeigt) erzeugt und somit ein Drehmoment von der Halterung 9 auf den Rahmen 1 übertragen werden kann, wodurch beim Rollen der Reinigungsrollen 19 und 20 über die Oberflächen des Rotorblattes 5 eine Anlagekraft erzeugt wird, sodass die Reinigungsrollen 19, 20 nicht von den jeweiligen Oberflächen abheben. Je kleiner Winkel W, desto größer die Anlagekraft. Es sei außerdem angemerkt, dass der Vorteil der Vermeidung des unerwünschten Abhebens durch Vorsehen besagter Vorspannung auch bei allen anderen Ausführungsformen besteht.

Nach einer nicht gezeigten Ausführungsform ist es grundsätzlich auch möglich, die beiden Reinigungsrollen 19 bzw. 20 über eine Antriebseinheit 26, umfassend beispielsweise ein Zahnradgetriebe oder einen Keilriemen- oder Zahnriemenantrieb, in Rotation zu versetzen, um eine aktive Reinigung von Oberflächen des Rotorblattes 5 zu erreichen.

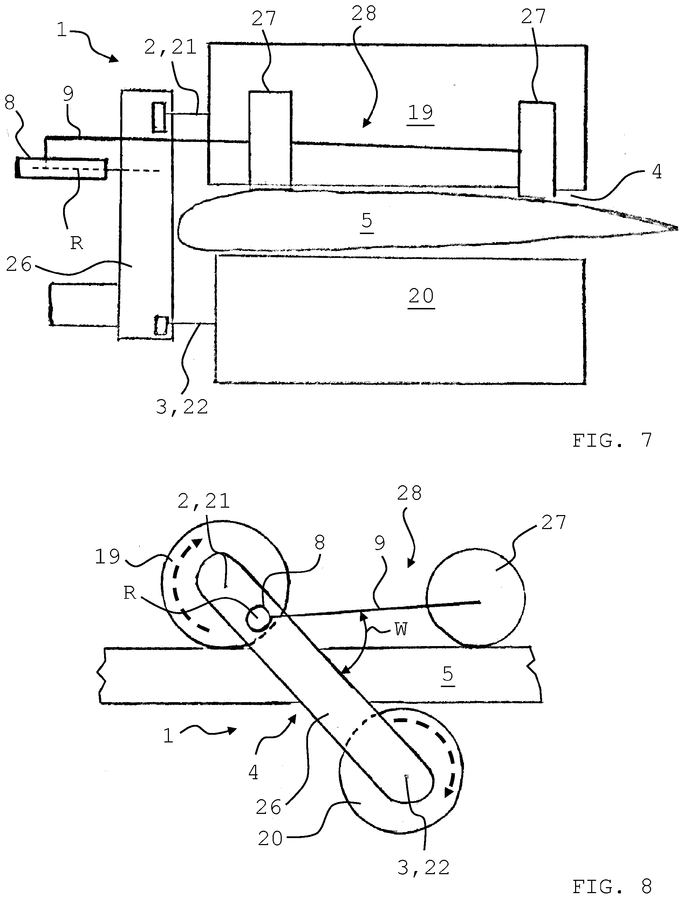

**Figuren 7 und 8** zeigen in einer Vorder- und Seitenansicht eine Ausführungsform, nach welcher die Vorrichtung eine weitgehend selbsttätige Reinigung des Rotorblattes 5 durchführen kann. Hier stützt sich das distale Ende (rechts in Fig. 8) der Halterung 9 mittels einer Räder 27 umfassenden Abstützeinheit 28 reibungsarm an der Oberseite des Rotorblatts 5 ab. Die beiden Reinigungsrollen 19, 20 sind am Rahmen 1 angeordnet und befinden sich wieder beidseitig des Rotorblattes 5. Mittels einer Antriebseinheit 26 werden beide Reinigungsrollen 19, 20 angetrieben. Vorzugsweise ist die Antriebseinheit 26 so ausgestaltet, dass die Reinigungsrollen 19, 20 mit unterschiedlichen Umfangsgeschwindigkeiten antreibbar sind. Somit wird eine Relativgeschwindigkeit erzeugt, welche zu einer Bewegung der Vorrichtung entlang der Längsachse des Rotorblattes 5 erfolgt. Die Drehrichtungen beider Reinigungsrollen 19, 20 sind identisch. Drehen sich beispielsweise beide Rollen im Uhrzeigersinn (gestrichelte Pfeile in Fig. 8), so bewegt sich die Vorrichtung nach links, wenn die obere Reinigungsrolle 19 im Kontaktbereich mit der Oberseite des Rotorblatts 5 eine höhere Umfangsgeschwindigkeit aufweist als die untere Reinigungsrolle 20. Dies kann durch ein Getriebe der Antriebseinheit 26, oder durch unterschiedliche Rollendurchmesser oder das Verwenden zweier getrennt ansteuerbarer Motoren erreicht werden (jeweils nicht gezeigt).

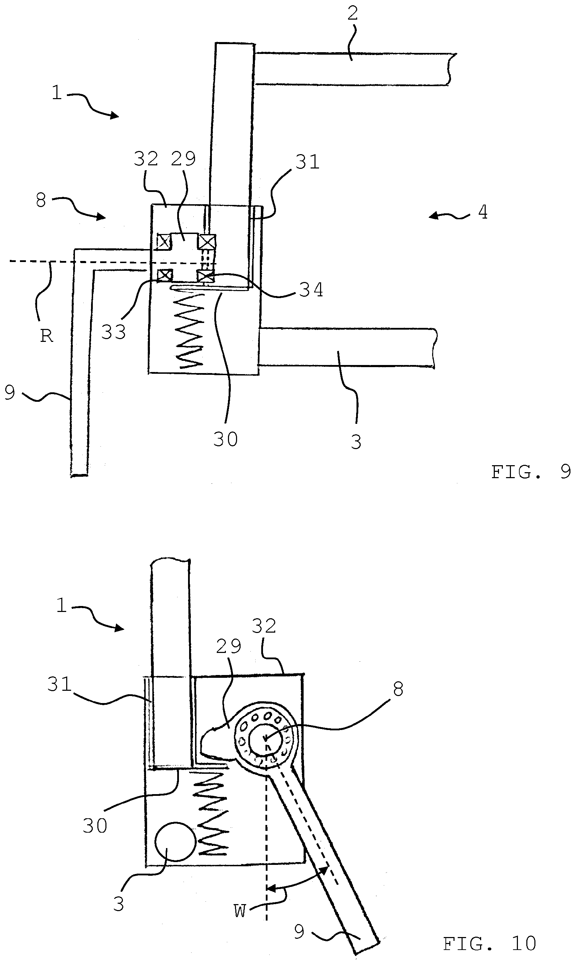

In den **Figuren 9 und 10** ist eine Ausführungsform mit veränderbarem Abstand zwischen den beiden Seitenschenkeln 2, 3 des Rahmens 1 gezeigt. Die Fig. 9 zeigt die Vorderansicht mit Blick in Richtung der Längsachse des Rotorblatts (nicht dargestellt), die Fig. 10 die entsprechende Seitenansicht, wobei dort nur ein relevanter Ausschnitt des Rahmens 1 um das Gelenk 8 herum dargestellt ist.

Die Halterung 9 mündet demnach am proximalen Ende in eine im Gehäuse 32 untergebrachte Nocke 29, welche durch Kippen der Halterung 9 in Rotation um das Gelenk 8 gebracht werden kann (Änderung des Winkels W), welches vorliegend ein Festlager 33 und ein Loslager 34 umfasst. Bewegt sich die Halterung 9 mit dem distalen Ende (rechts unten in Fig. 10) nach oben, drückt die Nocke 29 mehr oder weniger weit auf einen Mitnehmer 30, welcher wiederum an der im Bild vertikal verlaufenden, mit dem Gleitlager 31 gelagerten verschieblichen Hälfte des Mittelschenkels angeordnet ist, und diesen zusammenschiebt (die andere, fixierte Hälfte ist mit dem Gehäuse 32 verbunden). Um auf einfache Weise eine entgegengesetzte (rückstellende) Bewegung zu erlauben, arbeitet der Mitnehmer 30 gegen eine Feder (ohne Bezugszeichen). Auf diese Weise ist ein einfaches Ändern des Abstandes der beiden Seitenschenkel 2, 3 ermöglicht, so dass die Öffnung 4 flexibel an unterschiedlich dicke Rotorblätter anpassbar ist.

### Bezugszeichenliste

- 1: Rahmen
- 2,3: Seitenschenkel
- 4: Öffnung
- 5: Rotorblatt
- 6,7: Reinigungsschwamm
- 8: Gelenk
- 9: Halterung
- 10,11: Blattfederelement
- 12,13: Drehlager
- 14-17: Tragabschnitt
- 18: starres Anschlussstück
- 19,20: Reinigungsrolle
- 21,22: Welle
- 23,24: Freilauf
- 25: Andruckfeder
- 26: Antriebseinheit
- 27: Rad
- 28: Abstützeinheit
- 29: Nocke
- 30: Mitnehmer
- 31: Gleitlager
- 32: Gehäuse
- 33: Festlager
- 34: Loslager
- R: Rotationsachse
- W: Kippwinkel, Winkel

## Patentansprüche

1. Vorrichtung zur Reinigung eines Rotorblattes (5) eines Luftfahrzeugs, wobei dieselbe eine Öffnung (4) zur Durchführung des Rotorblattes (5) aufweist, welche einen Rand hat, wobei
- an wenigstens einem Seitenbereich dieses Randes wenigstens ein Reinigungselement (6, 7; 19, 20) vorhanden ist, **dadurch gekennzeichnet, dass**
- an einem diesem Seitenbereich gegenüberliegenden weiteren Seitenbereich des Randes ein Stützelement zur Beschränkung der Rotation der Öffnung (4) um eine in etwa in der zur Längsachse des Rotorblatts senkrecht stehenden Normalebene des Rotorblatts verlaufende Rotationsachse (R) durch Anlegen des Stützelements an die gegenüberliegende Seite des Rotorblatts, und zur Aufnahme von Druckkräften angeordnet ist, und
- wobei die Öffnung (4) in einem Rahmen (1) angeordnet ist, der über ein die Rotationsachse (R) bereitstellendes Gelenk (8) kippbar mit einer Halterung (9) verbunden ist,
so dass mittels Rotation des Rahmens (1) um die Rotationsachse (R) sowohl das wenigstens eine Reinigungselement (6, 7; 19, 20), als auch das Stützelement am Rotorblatt (5) anlegbar sind, während mittels der Halterung (9) den Rahmen (1) in Position am Rotorblatt (5) haltende Kräfte bereitstellbar sind.

2. Vorrichtung nach Anspruch 1, wobei das Gelenk (8) zur Übertragung von Drehmomenten eingerichtet ist.

3. Vorrichtung nach Anspruch 2, wobei zur Übertragung von Drehmomenten
- das Gelenk (8) eine Druck-, Zug- oder Torsionsfeder umfasst, oder
- als elastisches Element ausgebildet ist, oder
- zwischen Rahmen (1) und Halterung (9) eine Druck-, Zug- oder Torsionsfeder angeordnet ist,
- das Gelenk (8) mindestens einen Anschlag umfasst, welcher ein weitergehendes Kippen verhindert.

4. Vorrichtung nach einem der Ansprüche 1 bis 3, wobei das Reinigungselement als Reinigungsrolle (19, 20) ausgebildet ist.

5. Vorrichtung nach Anspruch 4, wobei die Reinigungsrolle (19, 20) über einen in eine Rotationsrichtung sperrenden Freilauf (23, 24) an dem Rahmen (1) gelagert ist, und/oder über einen Motor (25) angetrieben wird.

6. Vorrichtung nach einem der Ansprüche 1 bis 3, wobei das Reinigungselement als Reinigungsschwamm (6, 7) ausgebildet ist.

7. Vorrichtung nach Anspruch 6, wobei wenigstens ein Abschnitt des mit dem Reinigungsschwamm (6, 7) versehenen Seitenbereiches (2, 3) des Rahmens (1) federnd in die Öffnung (4) hineinbeweglich ist, durch die das Rotorblatt (5) hindurchgeführt ist, und/oder wobei der Abschnitt Drehlager (12) umfasst, an welchen der Reinigungsschwamm (6, 7) angeordnet ist, und/oder der Reinigungsschwamm (6, 7) ein Gelpolster umfasst.

8. Vorrichtung nach einem der Ansprüche 1 bis 3, wobei das Reinigungselement als Gelpolster ausgebildet ist.

9. Vorrichtung nach einem der vorhergehenden Ansprüche, wobei das Reinigungselement (6, 7; 19, 20) über eine Flüssigkeitszufuhr mit einer Reinigungsflüssigkeit versorgt wird.

10. Vorrichtung nach einem der Ansprüche 1 bis 9, **dadurch gekennzeichnet, dass** der Abstand zwischen den beiden Seitenbereichen mittels einer durch Kippen der Halterung (9) aktivierbaren Kinematik beeinflussbar ist.

11. Vorrichtung nach einem der Ansprüche 4, 5, 9 oder 10 mit zwei Reinigungsrollen (19, 20) oder mit einer Reinigungsrolle (19; 20) und einem rollenförmig ausgestalteten Stützelement, **dadurch gekennzeichnet, dass**
- an einem distalen Ende der Halterung (9) eine Abstützeinheit (28) zur reibungsarmen Lagerung dieses Endes am Rotorblatt (5) vorgesehen ist, oder dass
- die Halterung (9) an einem distalen Ende zur manuellen Führung durch den Benutzer vorgesehen ist,
wobei die Reinigungsrollen (19, 20) oder die eine Reinigungsrolle (19; 20) und das rollenförmig ausgestaltete Stützelement mittels einer Antriebseinheit (26) derart antreibbar und/oder derart beschaffen sind, dass mit ihnen die Vorrichtung in eine Vorzugsrichtung bewegbar ist.

12. Verfahren zum Reinigen eines Rotorblattes (5) eines Luftfahrzeugs, **dadurch gekennzeichnet, dass**
(a) das Rotorblatt (5) durch eine in einem Rahmen (1) angeordnete Öffnung (4) hindurchgeführt wird, die einen Rand aufweist, wobei an wenigstens einem Seitenbereich dieses Randes wenigstens ein Reinigungselement (6, 7; 19, 20) vorhanden ist;
(b) durch Kippen des Rahmens (1) mittels einer Halterung (9), die mittels eines Gelenks (8) am Rahmen (1) angeordnet ist, das wenigstens eine Reinigungselement (6, 7; 19, 20) an einer Seite des Rotorblattes (5) angelegt wird, bis
(c) das Kippen des Rahmens (1) mittels eines Stützelements, das an einem dem Seitenbereich gegenüberliegenden weiteren Seitenbereich des Randes angeordnet ist, beschränkt wird, indem besagtes Stützelement an einer gegenüberliegenden Seite des Rotorblattes (5) anliegt, wobei es auch Druckkräfte aufnimmt,
(d) wobei sich mittels eines Kippens der Halterung (9) um eine durch das Gelenk (8) vorgegebene, in etwa in der zur Längsachse des Rotorblatts senkrecht stehenden Normalebene des Rotorblatts verlaufende Rotationsachse (R) der Winkel zwischen Halterung (9) und Rahmen (1) verkleinert, so dass Druckkräfte sowohl auf das mindestens eine Reinigungselement (6, 7; 19, 20), als auch das Stützelement ausgeübt werden, welche diese Komponenten gegen die Seiten des Rotorblattes (5) pressen,
(e) während weiterhin mittels der Halterung (9) den Rahmen (1) in Position am Rotorblatt (5) haltende Kräfte bereitgestellt werden.

13. Verfahren nach Anspruch 12, wobei mittels des Gelenks (8) auch ein Drehmoment übertragen wird, welches das Anliegen des wenigstens einen Reinigungselements (6, 7; 19, 20) und des Stützelements an den gegenüberliegenden Seiten des Rotorblatts (5) unterstützt.

14. Verfahren nach einem der Ansprüche 12 oder 13, wobei sich eine Abstützeinheit (28), welche an einem distalen Ende der Halterung (9) angeordnet ist, reibungsarm am Rotorblatt (5) abstützt, während an den Seitenbereichen rollenförmige Reinigungselemente (19, 20), oder ein rollenförmiges Reinigungselement (19; 20) und ein rollenförmig ausgestalteten Stützelement angeordnet sind, welche mittels einer Antriebseinheit (26) auf unterschiedliche Umfangsgeschwindigkeiten angetrieben werden.

## Claims

1. Apparatus for cleaning a rotor blade (5) of an aircraft, wherein the same has an opening (4) for passing through the rotor blade (5), having an edge, whereby
- on at least one side region of this edge, at least one cleaning element (6, 7; 19, 20) is located, **characterized in that**
- on a further side region opposite this side region of the edge, a support element is located to limit, by way of resting the support element against the opposite side of the rotor blade, the rotation of the opening (4) around an axis of rotation (R) which runs within the rotor blade's normal plane which stands approximately perpendicular to the longitudinal axis of the rotor blade, and for absorbing compressive forces, and
- wherein the opening (4) is arranged in a frame (1), being tiltably connected to a holder (9) via a joint (8) that provides the axis of rotation (R),
so that by rotating the frame (1) around the axis of rotation (R) both the at least one cleaning element (6, 7; 19, 20) as well as the support element can rest against the rotor blade (5), while forces holding the frame (1) in position on the rotor blade (5) by using the holder (9) are provided.

2. Apparatus according to claim 1, wherein the joint (8) is arranged for the transmission of torques.

3. Apparatus according to claim 2, wherein for the transmission of torques
- the joint (8) comprises a compression, tension or torsion spring, or
- is designed as an elastic element, or
- a compression, tension or torsion spring is arranged between the frame (1) and holder (9),
- the joint (8) contains at least one end stop, which prevents further tilting.

4. Apparatus according to any one of claims 1 to 3, wherein the cleaning element is designed as a cleaning roller (19, 20).

5. Apparatus according to claim 4, the cleaning roller (19, 20) being mounted on the frame (1) by means of a freewheel (23, 24) which is locking in a rotation direction, and / or being driven by a drive unit (26).

6. Apparatus according to any one of claims 1 to 3, wherein the cleaning element is designed as a cleaning sponge (6, 7).

7. Apparatus according to claim 6, wherein at least a section of the frame's (1) side region (2, 3) being equipped with the cleaning sponge (6, 7) is resiliently movable into the opening (4) through which the rotor blade (5) is passed, and / or wherein the section includes pivot bearings (12) on which the cleaning sponge (6, 7) and/or the cleaning sponge (6, 7) comprises a gel pad.

8. Apparatus according to any one of claims 1 to 3, wherein the cleaning element is designed as a gel pad.

9. Apparatus according to any one of the preceding claims, wherein the cleaning element (6, 7; 19, 20) is supplied via a liquid supply with a cleaning liquid.

10. Apparatus according to any one of claims 1 to 9, **characterized in that** the distance between the two side regions can be controlled by means of a cinematics that can be activated by tilting the holder (9).

11. Apparatus according to any one of claims 4, 5, 9 or 10 having two cleaning rollers (19, 20) or with one cleaning roller (19; 20) and a roller-shaped support element, **characterized in that**
- at a distal end of the holder (9) a support unit (28) is provided for low-friction mounting of this end on the rotor blade (5), or **in that**
- the holder (9) is provided at a distal end for manual operation by the user,
wherein the cleaning rollers (19, 20) or the one cleaning roller (19; 20) and the roller-shaped support element can be driven by means a drive unit (26) and/or are constructed in a way such that the device can be moved in a preferred direction by them.

12. Method for cleaning a rotor blade (5) of an aircraft, **characterized in that**
(a) the rotor blade (5) is passed through an opening (4) arranged in a frame (1) which has an edge, wherein at least one cleaning element (6, 7; 19, 20) is present on at least one side region of this edge;
(b) by tilting the frame (1) by means of a holder (9) which is arranged on the frame (1) by means of a joint (8), the at least one cleaning element (6, 7; 19, 20) is rested against one side of the rotor blade (5), until
(c) the tilting of the frame (1) is limited by means of a support element arranged on a frame's further side region opposite to said side region, **in that** said support element rests against an opposite side of the rotor blade (5), also absorbing compressive forces,
(d) whereby the angle between the holder (9) and the frame (1) is reduced by tilting the holder (9) about an axis of rotation (R) provided by the joint (8) which runs approximately in the rotor blade's normal plane which is perpendicular to the longitudinal axis of the rotor blade, so that pressure forces are exerted on the at least one cleaning element (6, 7; 19, 20) as well as the support element, which press these components against the sides of the rotor blade (5),
(e) while by means of the holder (9) forces are continuously provided which hold the frame (1) in position on the rotor blade (5).

13. Method according to Claim 12, in which the joint (8) also transmits a torque which supports the resting of the at least one cleaning element (6, 7; 19, 20) as well as the support element against the opposite sides of the rotor blade (5).

14. Method according to any one of claims 12 or 13, in which a support unit (28), which is arranged at a distal end of the holder (9), is supported with low friction on the rotor blade (5), while roller-shaped cleaning elements (19, 20) or a roller-shaped cleaning element (19; 20) and a roller-shaped supporting element are arranged at the side regions, which are driven to different circumferential speeds by means of a drive unit (26).

## Revendications

1. Dispositif de nettoyage d'une pale de rotor (5) d'aéronef disposant d'une ouverture (4) pour le passage de la pale de rotor (5) comportant un rebord, dans lequel
- au moins un élément de nettoyage (6, 7, 19, 20) est prévu sur au moins une zone latérale de ce bord, **caractérisé en ce que**
- dans une autre partie latérale du bord opposée à cette partie latérale, un élément de support est placé pour limiter la rotation de l'ouverture (4) autour d'un axe de rotation (R) situé approximativement dans le plan normal de la pale de rotor, perpendiculaire à l'axe longitudinal de la pale du rotor par application de l'élément de support sur le côté opposé de la pale, et pour absorber les forces de compression, et
- dans lequel l'ouverture (4) est disposée dans un cadre (1) qui est relié de manière basculante à un support (9) par l'intermédiaire d'une articulation (8) à disposition de l'axe de rotation (R)
La rotation du cadre (1) autour de l'axe de rotation (R) permet d'appliquer à la fois l'élément de nettoyage (6, 7, 19, 20) et l'élément de support sur la pale de rotor (5), tandis que le support (9) permet d'obtenir des forces de maintien du cadre (1) en position sur la pale de rotor (5).

2. Dispositif selon la revendication 1, dans lequel l'articulation (8) est adaptée pour transmettre des couples de rotation.

3. Dispositif selon la revendication 2, dans lequel pour la transmission de couples
- articulation (8) comporte un ressort de compression, de traction ou de torsion, ou
- est conçu comme un élément élastique, ou
- un ressort de compression, de traction ou de torsion est disposé entre le cadre (1) et le support (9)
- l'articulation (8) comporte au moins une butée qui empêche un basculement prolongé.

4. Dispositif selon l'une des revendications 1 à 3, selon lequel pour la transmission de couples, l'élément de nettoyage est réalisé sous la forme d'un rouleau de nettoyage (19, 20).

5. Dispositif selon la revendication 4, dans lequel le rouleau de nettoyage (19, 20) est monté sur le cadre (1) par l'intermédiaire d'une roue libre (23, 24) bloquant dans un sens de rotation et/ou est entraîné par un moteur (25).

6. Dispositif selon l'une des revendications 1 à 3, dans lequel l'élément de nettoyage est une éponge de nettoyage (6, 7).

7. Dispositif selon la revendication 6, dans lequel au moins une partie de la zone latérale (2, 3) du cadre (1) munie de l'éponge de nettoyage (6, 7) est mobile élastiquement dans l'ouverture (4) à travers laquelle passe la pale de rotor (5) et/ou dans lequel la partie comprend des paliers rotatifs (12), sur lesquels l'éponge de nettoyage (6, 7) est disposée et/ou l'éponge de nettoyage (6, 7) comprend un rembourrage.

8. Dispositif selon l'une des revendications 1 à 3, dans lequel l'élément de nettoyage est réalisé sous la forme d'un rembourrage.

9. Appareil selon l'une des revendications précédentes, dans lequel l'élément de nettoyage (6, 7, 19, 20) est approvisionné en liquide de nettoyage par une arrivée de liquide.

10. Dispositif selon l'une des revendications 1 à 9, **caractérisé en ce que** la distance entre les deux zones latérales peut être influencée au moyen d'une cinématique activable par basculement du support.

11. Dispositif selon l'une des revendications 4, 5, 9 ou 10, comprenant deux rouleaux de nettoyage (19, 20) ou un rouleau de nettoyage (19, 20) et un élément de support configuré en forme de rouleau, **caractérisé en ce que**
- à une extrémité distale du support (9), une unité d'appui (28) est prévue sur la pale du rotor pour supporter cette extrémité à faible frottement, ou que
- le support (9) est prévu à une extrémité distale pour un guidage manuel par l'utilisateur,
si bien que les rouleaux de nettoyage (19, 20) ou un rouleau de nettoyage (19, 20) et l'élément de support configuré en forme de rouleau peuvent être entraînés et/ou réalisés au moyen d'une unité d'entraînement (26) de telle sorte qu'avec eux le dispositif peut être déplacé dans une direction préférentielle.

12. Procédé de nettoyage d'une pale de rotor (5) d'un aéronef, **caractérisé en ce que**
a) la pale de rotor (5) passe à travers une ouverture (4) aménagée dans un cadre (1) et comportant un bord, au moins un élément de nettoyage (6, 7, 19, 20) étant présent sur au moins une partie latérale de ce bord;
b) en inclinant le cadre (1) au moyen d'un support (9) monté sur le cadre (1) au moyen d'une articulation (8) et qui comporte au moins un élément de nettoyage sur un côté de la pale de rotor (5), jusqu'à ce que
c) le basculement du cadre (1) limité au moyen d'un élément de support disposé sur une autre partie latérale du bord opposée à la partie latérale, ledit élément de support étant en appui contre un côté opposé de la pale de rotor (5), en absorbant également les forces de compression,
d) sachant que, par un basculement du support (9) autour d'un axe normal de rotation (R) de la pale de rotor sensiblement perpendiculaire à l'axe longitudinal de la pale de rotor, l'angle entre le support (9) et le cadre (1) est réduit, de telle sorte que les forces de compression exercées sur au moins un élément de nettoyage (6,7,19,20) et sur l'élément de support compriment ces composants contre les côtés de la pale de rotor (5),
e) tandis que les forces qui continuent à maintenir le cadre (1) en position sur la pale du rotor (5) sont fournies au moyen du support (9).

13. Procédé selon la revendication 12, dans lequel un couple est également transmis au moyen de l'articulation (8) pour permettre l'application d'au moins un élément de nettoyage (6, 7, 19, 20) et de l'élément de support sur les côtés opposés de la pale de rotor (5).

14. Procédé selon l'une des revendications 12 ou 13, selon lequel une unité d'appui (28) disposée au niveau d'une extrémité distale du support prend appui sur la pale de rotor (5) avec un faible frottement, pendant que des éléments de nettoyage en forme de rouleau (19, 20) sont disposés sur les parties latérales, ou un élément de nettoyage en forme de rouleau (19, 20) et un élément de support en forme de rouleau sont entraînés à différentes vitesses périphériques au moyen d'une unité d'entraînement (26).
